# EUROPEAN PATENT APPLICATION

(11) **EP 4 618 042 A1**
(43) Date of publication of application: **17.09.2025**
(21) Application number: 25155741.9
(22) Date of filing: 04.02.2025
(51) Int. Cl.: G06V 10/82, G06V 20/40

(54) **COMPUTER-READABLE RECORDING MEDIUM, INFORMATION PROCESSING METHOD, AND INFORMATION PROCESSING DEVICE**

(30) Priority: 12.03.2024 IL 31142024
(71) Applicant: FUJITSU LIMITED, Kawasaki-shi, Kanagawa 211-8588 (JP); B.G. NEGEV TECHNOLOGIES AND APPLICATIONS LTD., at Ben-Gurion University, 841050 Beer Sheva (IL)
(72) Inventor: Kokubo, Hirotaka, Kawasaki-shi, Kanagawa, 211-8588 (JP); Machida, Takanori, Kawasaki-shi, Kanagawa, 211-8588 (JP); Higuchi, Yuji, Kawasaki-shi, Kanagawa, 211-8588 (JP); Fujishima, Yuki, Kawasaki-shi, Kanagawa, 211-8588 (JP); Murakami, Masahiko, Kawasaki-shi, Kanagawa, 211-8588 (JP); Hofman, Omer, 841050 Beer Sheva (IL); Giloni, Amit, 841050 Beer Sheva (IL); Elovici, Yuval, 841050 Beer Sheva (IL); Shabtai, Asaf, 841050 Beer Sheva (IL)
(74) Representative: Hoffmann Eitle

(57) **Abstract**

An information processing device (100) uses a first machine learning model (110) and obtains a first classification result (111). The information processing device (100) uses a second machine learning model (120) and obtains a second classification result (121). The information processing device (100) identifies a first frame, based on the first classification result (111) and the second classification result (121). The information processing device (100) identifies a first class with a highest degree of certainty in the first classification result (111) for any frame regarded as a reference. The information processing device (100) identifies a second frame that is immediately before or after the identified first frame. The information processing device (100) determines a series of frames to be invalid when a predetermined condition is satisfied by a relationship between a first degree of certainty of the first class in the first classification result (111) for the first frame and a second degree of certainty of the first class in the first classification result (111) for the second frame.

## Description

### FIELD OF THE INVENTION

The embodiments discussed herein are related to a computer-readable recording medium, an information processing method, and an information processing device.

### BACKGROUND OF THE INVENTION

One existing machine learning model recognizes regions reflecting an object in frames of moving image data and calculates, for each class, a degree of certainty that represents a likelihood that the object is classified into the class. There is a patch attack that degrades accuracy of the machine learning model by presenting a particular patch within a frame. The particular patch is also called an adversarial patch. The patch attack lowers the degree of certainty calculated by the machine learning model for a class to which an object correctly belongs, and increases the degree of certainty for a class to which the object does not belong.

An example of one prior art is a technique of determining whether an abnormal pattern is contained in a chronological recognition score generated using multiple recognition scores generated, respectively, using multiple pieces of image data obtained by shooting within a shooting range at mutually different times within a shooting time range. For example, refer to Published Japanese-Translation of PCT Application No. 2022/264331.

### SUMMARY OF THE INVENTION

It is an object in one aspect of the embodiments to at least solve the above problems in the conventional technologies.

According to an aspect of an embodiment, a computer-readable recording medium has stored therein a program for causing a computer to execute a process, the process including: using a first machine learning model and thereby obtaining, for each frame of a series of frames, a first classification result in which a first set of two or more classes into which an object in the each frame is classified is correlated with respective degrees of certainty of the two or more classes of the first set, the first set of the two or more classes being among a plurality of classes, and the first machine learning model calculating, for each class of the plurality of classes, a degree of certainty that the object in the each frame is classified into the each class of the plurality of classes; using a second machine learning model and thereby obtaining, for the each frame of the series of frames, a second classification result in which a second set of two or more classes into which the object in the each frame is classified is correlated with respective degrees of certainty of the two or more classes of the second set, the second set of two or more classes being of the plurality of classes, and the second machine learning model being different from the first machine learning model and calculating, for the each class of the plurality of classes, a degree of certainty that the object in the each frame is classified into the each class; based on the obtained first classification result and the obtained second classification result, identifying, among the series of frames, a first frame whose class with a highest degree of certainty is different in the first classification result and the second classification result and differs in the first classification result from that of a second frame whose class with the highest degree of certainty is identical in the first classification result and in the second classification result; and determining the series of frames to be invalid when a condition is satisfied by a relationship between a first degree of certainty of a first class in the first classification result for the identified first frame and a second degree of certainty of the first class in the first classification result for a third frame that is immediately before or immediately after the identified first frame, and determining the series of frames to be not invalid when the condition is not satisfied by the relationship, the first class being the class, of the second frame, with the highest degree of certainty in the first classification result.

### BRIEF DESCRIPTION OF DRAWINGS

Fig. 1 is an explanatory view of a practical example of an information processing method according to an embodiment.
Fig. 2 is an explanatory view of the example of an information processing system 200.
Fig. 3 is a block diagram depicting an example of a hardware configuration of an information processing device 100.
Fig. 4 is a block diagram of an example of a functional configuration of the information processing device 100.
Fig. 5 is an explanatory view of an example of operation of the information processing device 100.
Fig. 6 is an explanatory view of the example of the operation of the information processing device 100.
Fig. 7 is an explanatory view of an example of an effect.
Fig. 8 is a flowchart of an example of an overall processing procedure.

### DESCRIPTION OF THE INVENTION

First, problems associated with the conventional techniques are discussed. The prior art has a problem in that accurately detecting a patch attack is difficult. For example, it is impossible to discern whether the cause of a reduction in the degree of certainty calculated by a machine learning model with respect to a class into which classification of an object is correct, lies in a patch attack or in characteristics of the machine learning model.

Preferred embodiments of a computer-readable recording medium, an information processing method, and an information processing device according to the present invention are explained with reference to the accompanying drawings.

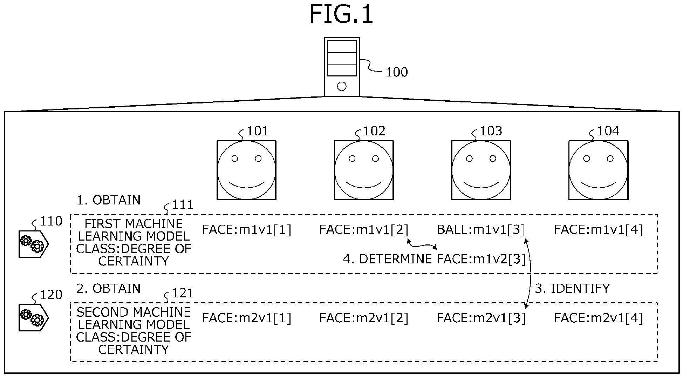

Fig. 1 is an explanatory view of a practical example of an information processing method according to an embodiment. An information processing device 100 is a computer for detecting a patch attack. The information processing device 100 is, for example, a server or a personal computer (PC).

One existing machine learning model is called an object detection model. The object detection model has a function of recognizing a region where an object appears in a frame, identifying the type of the object, and calculating, for each class, a degree of certainty that represents a likelihood that the object is classified into the class. The degree of certainty is a value not less than 0 but not more than 1. The object detection model is, for example, YOLO or Faster region-based convolutional neural networks (RCNN). For example, "YOLO: Real-Time Object Detection", [online], [searched June 20, 2023], Internet < URL : https://pjreddie.com/darknet/yolo/> may be referred to regarding YOLO. For example, Ren, Shaoqing, et al, "Faster r-cnn: Towards real-time object detection with region proposal networks." Advances In Neural Information Processing Systems 28 (2015) may be referred to regarding Faster RCNN.

There is a patch attack that degrades the accuracy of a machine learning model by presenting an adversarial patch within a frame. For example, by attaching an adversarial patch to an object, the adversarial patch may be presented in a frame reflecting the object. For example, by combining an adversarial patch in a frame reflecting an object, the adversarial patch may be presented in the frame reflecting the object. The patch attack lowers the degree of certainty calculated by the machine learning model for a class into which classification of an object is correct and increases the degree of certainty for a class into which classification of the object is incorrect. Accordingly, as a result of a patch attack, the class to which the object belongs is recognized incorrectly. For example, Brown, Tom B., et al, "Adversarial patch." arXiv preprint arXiv: 1712.09665 (2017) and Liu, Xin, et al, "Dpatch: An adversarial patch attack on object detectors." arXiv preprint arXiv: 1806.02299 (2018) may be referred to regarding a patch attack.

Conventionally, there is a problem in that accurate detection of a patch attack is difficult. For example, a first technique is conceivable that attempts to detect a patch attack by using two types of object detection models. For example, the two types of object detection models have different algorithms, respectively. It is preferable for the two types of object detection models to be in a state where an adversarial patch that is effective against one object detection model is ineffective against the other object detection model. The first technique detects a patch attack when classes with a highest degree of certainty calculated, respectively, by the two types of object detection models do not coincide.

It is difficult for the first technique to detect a patch attack with high accuracy. For example, even when no patch attack is present, the object detection model may algorithmically calculate the degree of certainty for a class into which classification of an object is incorrect to be higher than the degree of certainty for a class into which classification of the object is correct. In this case, the first technique erroneously detects a patch attack in spite of no patch attack being present. Accordingly, as a result of misdetection of a patch attack, a legitimate user may be determined as an attacker.

For example, a second technique is also conceivable in which a patch attack is detected when the number of frames that do not coincide between classes having a highest degree of certainty calculated by each of the two types of object detection models is at least equal to a predetermined threshold value. With the second technique as well, accurate detection of a patch attack is difficult. As described, for example, even when no patch attack is present, the object detection model may algorithmically calculate the degree of certainty for a class into which classification of an object is incorrect to be higher than the degree of certainty for a class into which classification of the object is correct. In this case, the second technique cannot discern whether, in a given frame, the cause of non-coincidence between classes with a highest degree of certainty calculated by each of the two types of object detection models lies in a patch attack or in an algorithmic problem of the object detection models. Thus, in the second technique, an instance where the number of frames in each of the classes with a highest degree of certainty calculated by each of the two types of object detection models do not coincide may not be a suitable index for detecting a patch attack.

Thus, in the present embodiment, an information processing method is described that facilitates detection of a patch attack with high accuracy. For example, the present embodiment may facilitate discerning whether the cause of non-coincidence between classes with a highest degree of certainty calculated by each of the two types of object detection models lies in a patch attack or in an algorithmic problem of either one of the object detection models.

In Fig. 1, an information processing device 100 stores a first machine learning model 110. The first machine learning model 110 has a function of accepting input of a frame and calculating, for each class, a degree of certainty that represents a likelihood that an object in the input frame is classified into the class. The frame is image data. The first machine learning model 110 is, for example, YOLO.

The information processing device 100 stores a second machine learning model 120. The second machine learning model 120 has a function of accepting input of a frame and calculating, for each class, a degree of certainty that represents a likelihood that an object in the input frame is classified into the class. The frame is image data. Preferably, the second machine learning model 120 may have an algorithm different from that of the first machine learning model 110. The second machine learning model 120 is, for example, Faster RCNN.

The information processing device 100 obtains a series of frames. The series of frames are, for example, pieces of image data contained in moving image data. The series of frames may be, for example, continuously captured pieces of image data, instead of moving image data. For example, the information processing device 100 receives and thereby obtains the series of frames from a predetermined image capturing device. For example, based on a user operation input, the information processing device 100 may accept input of a series of frames and thereby obtain the series of frames. In an example depicted in Fig. 1, the information processing device 100 obtains, for example, a series of frames containing frames 101 to 104.

(1-1) For each frame of the series of frames, the information processing device 100 uses the first machine learning model 110 to obtain a first classification result 111 in which two or more classes into which an object in the frame is classified are correlated with respective degrees of certainty of the two or more classes.

In the example depicted in Fig. 1, the first classification result 111 contains, for example, correspondence information "face:m1v1[1]" in which a class "face" with a highest degree of certainty and into which an object in the frame 101 is classified, is correlated with a degree of certainty "m1v1[1]" for the class "face". The first classification result 111 may contain, for example, correspondence information (not shown) in which classes, respectively with, a second and subsequent highest degrees of certainty and into which the object in the frame 101 is classified, are correlated with respectively corresponding degrees of certainty thereof.

The first classification result 111 contains, for example, correspondence information "face:m1v1[2]" in which a class "face" with a highest degree of certainty and into which an object in the frame 102 is classified, is correlated with a degree of certainty "m1v1 [2]" for the class "face". The first classification result 111 may contain, for example, correspondence information (not shown) in which classes respectively with a second and subsequent highest degrees of certainty and into which the object in the frame 102 is classified, are correlated with respectively corresponding degrees of certainty thereof.

The first classification result 111 contains, for example, correspondence information "ball:m1v1[3]" in which a class "ball" with a highest degree of certainty and into which an object in the frame 103 is classified, is correlated with a degree of certainty "m1v1 [3]" for the class "ball". The first classification result 111 contains, for example, correspondence information "face:m1v2[3]" in which a class "face" with a second highest degree of certainty and into which the object in the frame 103 is classified, is correlated with a degree of certainty "m1v2[3]". The first classification result 111 may contain, for example, correspondence information (not shown) in which classes respectively with a third and subsequent highest degrees of certainty and into which the object in the frame 103 is classified, are correlated with respectively corresponding degrees of certainty thereof.

The first classification result 111 contains, for example, correspondence information "face:m1v1[4]" in which a class "face" with a highest degree of certainty and into which an object in the frame 104 is classified, is correlated with a degree of certainty "m1v1 [4]" for the class "face". The first classification result 111 may contain, for example, correspondence information (not shown) in which classes respectively with a second and subsequent highest degrees of certainty and into which the object in the frame 104 is classified, are correlated with respectively corresponding degrees of certainty thereof.

(1-2) For each of the series of frames, the information processing device 100 uses the second machine learning model 120 to obtain a second classification result 121 in which two or more classes into which an object in the frame is classified are correlated with respective degrees of certainty of the two or more classes.

In the example depicted in Fig. 1, the second classification result 121 contains, for example, correspondence information "face:m2v1[1]" in which a class "face" with a highest degree of certainty and into which an object in the frame 101 is classified, is correlated with a degree of certainty "m2v1[1]" for the class "face". The second classification result 121 may contain, for example, correspondence information (not shown) in which classes respectively with a second and subsequent highest degrees of certainty and into which the object in the frame 101 is classified, are correlated with respectively corresponding degrees of certainty thereof.

The second classification result 121 contains, for example, correspondence information "face:m2v1[2]" in which a class "face" with a highest degree of certainty and into which an object in the frame 102 is classified, is correlated with a degree of certainty "m2v1[2]" for the class "face". The second classification result 121 may contain, for example, correspondence information (not shown) in which classes respectively with a second and subsequent highest degrees of certainty and into which the object in the frame 102 is classified, are correlated with respectively corresponding degrees of certainty thereof.

The second classification result 121 contains, for example, correspondence information "face:m2v1[3]" in which a class "face" with a highest degree of certainty and into which an object in the frame 103 is classified, is correlated with a degree of certainty "m2v1[3]" for the class "face". The second classification result 121 may contain, for example, correspondence information (not shown) in which classes respectively with a second and subsequent highest degrees of certainty and into which the object in the frame 103 is classified, are correlated with respectively corresponding degrees of certainty thereof.

The second classification result 121 contains, for example, correspondence information "face:m2v1[4]" in which a class "face" with a highest degree of certainty and into which an object in the frame 104 is classified, is correlated with a degree of certainty "m2v1[4]" for the class "face". The second classification result 121 may contain, for example, correspondence information (not shown) in which classes respectively with a second and subsequent highest degrees of certainty and into which the object in the frame 104 is classified, are correlated with respectively corresponding degrees of certainty thereof.

(1-3) The information processing device 100 identifies a first frame, based on the obtained first classification result 111 and the obtained second classification result 121. The first frame is a frame whose class with a highest degree of certainty is different, in the first classification result 111, from that of any frame regarded as a reference among the series of frames, and whose class with a highest degree of certainty, differs in the first classification result 111 and the second classification result 121.

The frame regarded as a reference is a frame among the series of frames and whose class with a highest degree of certainty is identical in the first classification result 111 and in the second classification result 121. In the example depicted in Fig. 1, the frame regarded as a reference is, for example, the frame 101.

In the example depicted in Fig. 1, the information processing device 100 identifies, for example, the frame 103 whose class with a highest degree of certainty is different in the first classification result 111 from that of the frame 101 and whose class with a highest degree of certainty differs in the first classification result 111 and the second classification result 121. The information processing device 100 treats the frame 103 as the first frame. This enables the information processing device 100 to identify a first frame, which may have been subject to a patch attack.

(1-4) The information processing device 100 identifies a first class with a highest degree of certainty in the first classification result 111 with respect to any frame regarded as a reference. In the example depicted in Fig. 1, the information processing device 100 identifies, as the first class, for example, the class "face," which has a highest degree of certainty in the first classification result 111 for the frame 101. The information processing device 100 identifies a second frame that is immediately before or immediately after the identified first frame. In the example depicted in Fig. 1, the information processing device 100 identifies, as the second frame, for example, the frame 102 positioned immediately before the frame 103.

The information processing device 100 determines, based on the first class, whether a predetermined condition is satisfied by a relationship between a first degree of certainty of the first class in the first classification result 111 for the first frame and a second degree of certainty of the first class in the first classification result 111 for to the second frame. The information processing device 100 determines, for example, whether a predetermined condition is satisfied by an absolute difference between the first degree of certainty and the second degree of certainty. In the example depicted in Fig. 1, the predetermined condition is, for example, that the absolute difference between the first degree of certainty and the second degree of certainty is at least equal to a threshold value.

In the example depicted in Fig. 1, the information processing device 100 obtains, as the first degree of certainty, for example, the degree of certainty "m1v2[3]" for the class "face" into which the object in the frame 103 is classified. The information processing device 100 obtains, as the second degree of certainty, for example, the degree of certainty "m1v1[2]" for the class "face" into which an object in the frame 102 is classified. The information processing device 100 determines, for example, whether an absolute difference " | m1v2[3]-m1v1[2]| " between the first degree of certainty and the second degree of certainty is at least equal to the threshold value. The threshold value is set, for example, in advance by the user.

The information processing device 100 determines that the series of frames is invalid when the relationship satisfies the predetermined condition. "The series of frames is invalid" means that a patch attack has been made on at least any one of the series of frames. "The series of frames is invalid" may mean that a patch attack has been made on the first frame among the series of frames. The information processing device 100 determines that the series of frames is not invalid when the relationship does not satisfy the predetermined condition. The information processing device 100 may output the result of determination of whether the series of frames is invalid, in such a manner as to allow reference by the user.

In the example depicted in Fig. 1, it is assumed, for example, that the information processing device 100 has determined the absolute difference "|m1v2[3]-m1v1[2]|" to be at least equal to the threshold value. Accordingly, the information processing device 100 determines, for example, that the series of frames is invalid. The information processing device 100 outputs, for example, notification indicating a determination that the series of frames is invalid, in such a manner as to allow reference by the user. As a result, the information processing device 100 may detect a patch attack with high accuracy.

For example, in a case where an adversarial patch is attached to an object, a frame obtained by shooting the object from a specific shooting direction is considered to have properties such that a patch attack is particularly effective and therefore the degree of certainty of the class into which classification of the object is correct tends to decrease. Thus, by referring to the first degree of certainty and the second degree of certainty, the information processing device 100 may determine, with consideration of the above properties, whether the series of frames is invalid, depending on the magnitude of variation in the degree of certainty. This enables the information processing device 100 to detect a patch attack with high accuracy.

Although here, for simplification of description, a case has been described where the information processing device 100 identifies a single first frame, without limitation hereto, there may be a case, for example, where the information processing device 100 identifies multiple first frames. In this case, the information processing device 100 may calculate, for example, an absolute difference between the first degree of certainty and the second degree of certainty, for each of the identified first frames. The information processing device 100 may determine whether the series of frames is invalid, for example, based on a statistic related to the absolute difference.

Although here, a case has been described where the function of the information processing device 100 is implemented by a single computer, without limitation hereto, there may be a case, for example, where the function of the information processing device 100 is implemented by cooperation of multiple computers. For example, the function of the information processing device 100 may be implemented on a cloud.

Although here, a case has been described where the information processing device 100 stores the first machine learning model 110, without limitation hereto, there may be a case, for example, where the information processing device 100 does not store the first machine learning model 110. In this case, the information processing device 100 may receive the first classification result 111, for example, from another computer that stores the first machine learning model 110.

Although here, a case has been described where the information processing device 100 stores the second machine learning model 120, without limitation hereto, there may be a case, for example, where the information processing device 100 does not store the second machine learning model 120. In this case, the information processing device 100 may receive the second classification result 121, for example, from another computer that stores the second machine learning model 120.

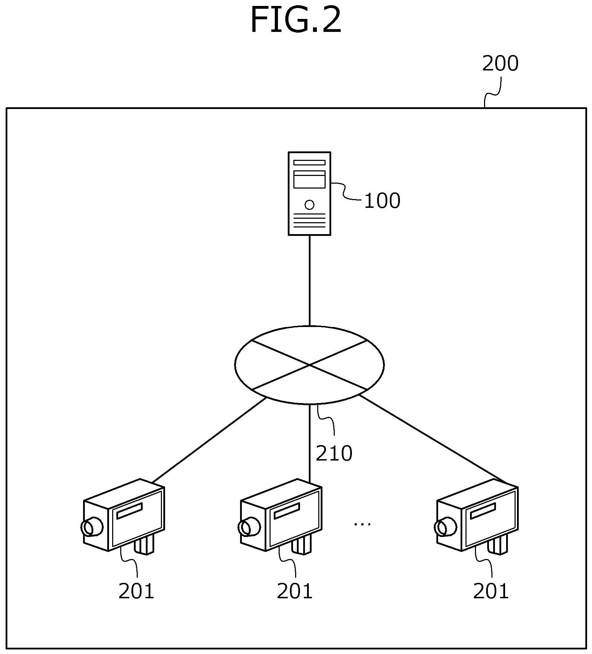

With reference to Fig. 2, an example of an information processing system 200 is described to which the information processing device 100 depicted in Fig. 1 is applied.

Fig. 2 is an explanatory view of the example of the information processing system 200. In Fig. 2, the information processing system 200 includes the information processing device 100 and one or more image capturing devices 201.

In the information processing system 200, the information processing device 100 and the image capturing devices 201 are connected via wires or a wireless network 210. The network 210 is, for example, local region network (LAN), wide region network (WAN), or the Internet.

The information processing device 100 is a computer that detects a patch attack. The information processing device 100 stores the first machine learning model. The information processing device 100 stores the second machine learning model. The information processing device 100 receives a series of frames from an image capturing device 201.

For each of the series of frames, the information processing device 100 uses the first machine learning model to obtain the first classification result in which two or more classes into which an object in the frame is classified are correlated with respective degrees of certainty of the two or more classes. For each of the series of frames, the information processing device 100 uses the second machine learning model to obtain the second classification result in which two or more classes into which an object in the frame is classified are correlated with respective degrees of certainty of the two or more classes.

The information processing device 100 identifies one or more first frames, based on the obtained first classification result and the obtained second classification result. The first frame is a frame whose class has a highest degree of certainty and in the first classification result, whose class is different from that of any frame regarded as a reference among the series of frames, and whose class with a highest degree of certainty differs in the first classification result and the second classification result. The frame regarded as a reference is a frame among the series of frames and whose class with a highest degree of certainty is identical in the first classification result and in the second classification result.

The information processing device 100 identifies a first class with a highest degree of certainty in the first classification result with respect to any frame regarded as a reference. The information processing device 100 identifies a second frame that is immediately before or immediately after each of the identified first frames and stores the second frame in correlation with the identified first frame. For each of the identified first frames, the information processing device 100 calculates an absolute difference between the first degree of certainty of the first class in the first classification result for the first frame and the second degree of certainty of the first class in the first classification result for the identified second frame.

The information processing device 100 determines whether a statistic related to the calculated absolute differences satisfies a predetermined condition. The statistic is, for example, a total value. The statistic may be, for example, a mean, a maximum, a minimum, a mode, or a median. The predetermined condition is that the statistic is at least equal to a threshold value. The threshold value is set, for example, in advance by the user.

When the predetermined condition is satisfied, the information processing device 100 determines that the series of frames is invalid and that a patch attack is present. When the predetermined condition is not satisfied, the information processing device 100 determines that the series of frames is not invalid and that a patch attack is not present. The information processing device 100 outputs the result of determination of whether a patch attack is present, in such a manner as to allow reference by the user. The information processing device 100 is, for example, a server or a PC.

The image capturing device 201 is a computer configured to generate frames reflecting an object. The image capturing device 201 includes, for example, multiple imaging devices. The image capturing device 201 generates frames obtained by shooting a specific area by the imaging devices. When an object is in the specific area, the image capturing device 201 generates frames reflecting the object. The image capturing device 201 transmits a series of continuously generated frames to the information processing device 100. The image capturing device 201 is, for example, a digital camera. The image capturing device 201 is, for example, a fixed-point camera. The image capturing device 201 may be, for example, movable. The image capturing device 201 is, for example, a surveillance camera.

An example of application of the information processing system 200 is described. The information processing system 200 is applicable to, for example, a case of supporting checkout operations at a register by recognizing a product reflected in a series of frames. For example, a patch attack is conceivable that attempts to induce misidentification of a product by attaching an adversarial patch to the product. To address this, the information processing device 100 may detect the patch attack with high accuracy. The information processing device 100 may easily avert damage attributable to misidentification of a product. The information processing device 100 may easily prevent a legitimate customer not an attacker from being misidentified as an attacker. Thus, the information processing device 100 may improve customer convenience, safety, etc.

The information processing system 200 is applicable to, for example, a case of supporting monitoring operations of searching for a wanted or missing person, etc., or detecting an intruder or a suspicious person, etc., by recognizing a person reflected in a series of frames. For example, a patch attack is conceivable that tries to induce misidentification of a person by attaching an adversarial patch to the face. To address this, the information processing device 100 may detect the patch attack with high accuracy. The information processing device 100 may easily avert damage attributable to misidentification of a person. The information processing device 100 may easily prevent a legitimate person not a suspicious person or the like from being misidentified as a suspicious person or the like.

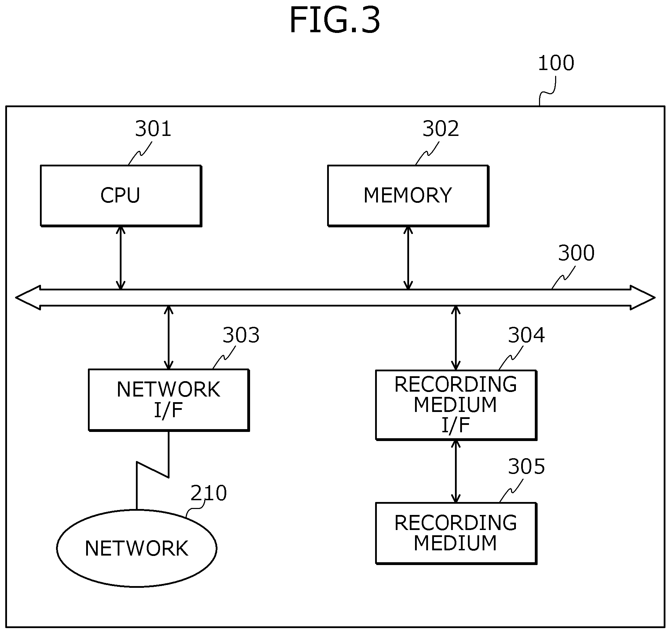

Next, an example of a hardware configuration of the information processing device 100 is described with reference to Fig. 3

Fig. 3 is a block diagram depicting an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are connected by a bus 300.

Here, the CPU 301 governs overall control of the information processing device 100. The memory 302, for example, includes read-only memory (ROM), random access memory (RAM), and flash ROM, etc. In particular, for example, the flash ROM and/or ROM store various types of programs, and the RAM is used as a work area by the CPU 301. Programs stored to the memory 302 are loaded onto the CPU 301, whereby encoded processes are executed by the CPU 301.

The network I/F 303 is connected to a network 210 through a communications line and is connected to other computers via the network 210. Further, the network I/F 303 administers an internal interface with the network 210 and controls the input and output of data from other computers. The network I/F 303, for example, is a modem, a LAN adapter, etc.

The recording medium I/F 304, under the control of the CPU 301, controls the reading and writing of data with respect to the recording medium 305. The recording medium I/F 304 is, for example, a disk drive, a solid-state drive (SSD), a universal serial bus (USB) port, etc. The recording medium 305 is a non-volatile memory storing therein data written thereto under the control of the recording medium I/F 304. The recording medium 305 is, for example, a disk, a semiconductor memory, a USB memory, etc. The recording medium 305 may be removable from the information processing device 100.

The information processing device 100, in addition to the components described above, may have, for example, a keyboard, a mouse, a display, a printer, a scanner, a microphone, a speaker, etc. Further, the information processing device 100 may have the recording medium I/F 304 and/or the recording medium 305 in plural. Further, the information processing device 100 may omit the recording medium I/F 304 and/or the recording medium 305.

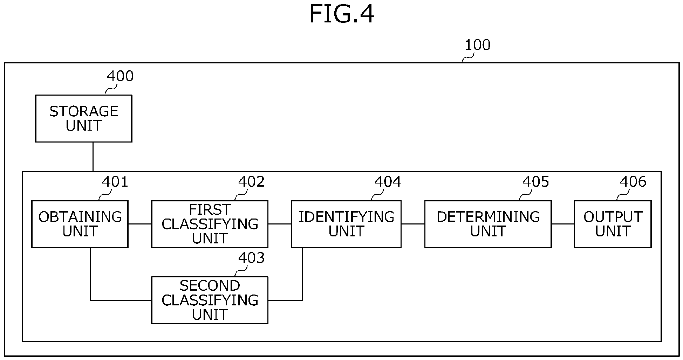

An example of a functional configuration of the information processing device 100 is described with reference to Fig. 4.

Fig. 4 is a block diagram of an example of the functional configuration of the information processing device 100. The information processing device 100 includes a storage unit 400, an obtaining unit 401, a first classifying unit 402, a second classifying unit 403, an identifying unit 404, a determining unit 405, and an output unit 406.

The storage unit 400 is implemented by, for example, a storage region such as the memory 302 or the recording medium 305 depicted in Fig. 3. Hereinafter, a case is described, but not limitative, where the storage unit 400 is included in the information processing device 100. For example, the storage unit 400 may be included in a device different from the information processing device 100 so that the storage contents of the storage unit 400 may be referred to from the information processing device 100.

The obtaining unit 401 to the output unit 407 function as an example of a control unit. For example, the obtaining unit 401 to the output unit 407 implement respective functions thereof, for example, by causing the CPU 301 to execute a program stored in a storage region such as the memory 302 or the recording medium 305 depicted in Fig. 3, or by the network I/F 303. The results of processing by the functional units are stored, for example, to a storage region such as the memory 302 or the recording medium 305 depicted in Fig. 3.

The storage unit 400 stores various pieces of information that are referred to or updated in processing by the functional units. The storage unit 400 stores, for example, the first machine learning model. The first machine learning model has a function of calculating, for each class, a degree of certainty that an object in a frame is classified into the class. The object detection model has, for example, a function of recognizing a region where an object is appearing in a frame, identifying a type of the object, and calculating, for each of the classes, a degree of certainty that represents a likelihood that the object is classified into the class. The degree of certainty is a value not less than 0 but not more than 1. The first machine learning model is, for example, YOLO or Faster RCNN. The first machine learning model is obtained, for example, by the obtaining unit 401. The first machine learning model may be stored, for example, in advance in the storage unit 400.

The storage unit 400 stores, for example, the second machine learning model. The second machine learning model has an algorithm different from that of the first machine learning model. The second machine learning model has a function of calculating, for each of the classes, a degree of certainty that an object in a frame is classified into the class. The second machine learning model has, for example, a function of recognizing a region where an object is appearing in a frame, identifying a type of the object, and calculating, for each of the classes, a degree of certainty that represents a likelihood that the object is classified into the class. The degree of certainty is a value not less than 0 but not more than 1. The second machine learning model is, for example, YOLO or Faster RCNN. The second machine learning model is obtained, for example, by the obtaining unit 401. The second machine learning model may be stored, for example, in advance in the storage unit 400.

The storage unit 400 stores, for example, a series of frames. A frame is image data. The series of frames is, for example, multiple pieces of image data included in moving image data. The series of frames may be, for example, continuously captured pieces of image data, instead of moving image data. The series of frames is obtained, for example, by the obtaining unit 401.

For each frame of the series of frames, the storage unit 400 stores, for example, the first classification result in which two or more classes into which an object in the frame is classified are correlated with respective degrees of certainty of the two or more classes. The first classification result is generated, for example, using the first machine learning model. The first classification result is generated, for example, by the first classifying unit 402. The first classification result may be obtained, for example, by the obtaining unit 401.

For each frame of the series of frames, the storage unit 400 stores, for example, the second classification result in which two or more classes into which an object in the frame is classified are correlated with respective degrees of certainty of the two or more classes. The second classification result is generated, for example, using the second machine learning model. The second classification result is generated, for example, by the second classifying unit 403. The second classification result may be obtained, for example, by the obtaining unit 401.

The obtaining unit 401 obtains various pieces of information for use in processing by the functional units. The obtaining unit 401 stores the obtained various pieces of information into the storage unit 400, or outputs the information to the functional units. The obtaining unit 401 may output various pieces of information previously stored in the storage unit 400 to the functional units. The obtaining unit 401 obtains various pieces of information, for example, based on user operation input. The obtaining unit 401 may obtain various pieces of information from a device different from the information processing device 100.

The obtaining unit 401 obtains, for example, the first machine learning model. For example, based on a user operation input, the obtaining unit 401 accepts input of the first machine learning model and thereby obtains the first machine learning model. For example, the obtaining unit 401 obtains the first machine learning model by receiving the first machine learning model from another computer.

The obtaining unit 401 obtains, for example, the second machine learning model. For example, based on a user operation input, the obtaining unit 401 accepts input of the second machine learning model and thereby obtains the second machine learning model. For example, the obtaining unit 401 obtains the second machine learning model by receiving the second machine learning mode from another computer.

The obtaining unit 401 obtains, for example, a series of frames. For example, based on a user operation input, the obtaining unit 401 accepts input of a series of frames and thereby obtains the series of frames. For example, the obtaining unit 401 obtains the series of frames by receiving the series of frames from another computer. Another computer is, for example, the image capturing device 201.

The obtaining unit 401 obtains, for example, the first classification result. The obtaining unit 401 obtains the first classification result, for example, in a case where the first classification result is not generated by the first classifying unit 402. For example, based on a user operation input, the obtaining unit 401 accepts input of the first classification result and thereby obtains the first classification result. For example, the obtaining unit 401 obtains the first classification result by receiving the first classification result from another computer.

The obtaining unit 401 obtains, for example, the second classification result. The obtaining unit 401 obtains the second classification result, for example, in a case where the second classification result is not generated by the second classifying unit 403. For example, based on a user operation input, the obtaining unit 401 accepts input of the second classification result and thereby obtains the second classification result. For example, the obtaining unit 401 obtains the second classification result by receiving the second classification result from another computer.

The obtaining unit 401 may accept a start trigger to start processing by any functional unit. The start trigger is, for example, a predetermined operation input by the user. The start trigger may be, for example, reception of predetermined information from another computer. The start trigger may be, for example, output of predetermined information by a functional unit.

The obtaining unit 401 accepts, for example, acquisition of a series of frames as a trigger to start processing of the first classifying unit 402, the second classifying unit 403, the identifying unit 404, and the determining unit 405. For example, the obtaining unit 401 may accept acquisition of the first classification result and the second classification result as a start trigger to start processing of the identifying unit 404 and the determining unit 405.

For each frame of the series of frames obtained by the obtaining unit 401, the first classifying unit 402 uses the first machine learning model to obtain the first classification result in which two or more classes into which an object in the frame is classified are correlated with respective degrees of certainty of the two or more classes. The two or more classes are, for example, a predetermined number of classes in descending order from one with a highest degree of certainty among the classes.

The first classifying unit 402 inputs, into the first machine learning model, for example, each of the series of frames obtained by the obtaining unit 401. For example, for each of the series of frames output from the first machine learning model 110 and obtained by the obtaining unit 40, the first classifying unit 402 generates the first classification result in which two or more classes into which an object in the frame is classified are correlated with respective degrees of certainty of the two or more classes. Consequently, for each frame of the series of frames, the first classifying unit 402 may classify an object appearing in the frame into two or more classes. The first classifying unit 402 may obtain a reference for detecting a patch attack.

For each frame of the series of frames obtained by the obtaining unit 401, the second classifying unit 403 uses the second machine learning model to obtain the second classification result in which two or more classes into which the object in the frame is classified are correlated with respective degrees of certainty of the two or more classes. The two or more classes are, for example, a predetermined number of classes in descending order from one with a highest degree of certainty among the classes.

The second classifying unit 403 inputs, for example, each of the series of frames obtained by the obtaining unit 401, into the second machine learning model. For example, for each frame of the series of frames output from the second machine learning model and obtained by the obtaining unit 40, the second classifying unit 403 generates the second classification result in which two or more classes into which an object in the frame is classified are correlated with respective degrees of certainty of the two or more classes. The second classifying unit 403 may thus obtain a guide for detecting a patch attack.

Based on the obtained first classification result and the obtained second classification result, the identifying unit 404 identifies one or more first frames among the series of frames. A first frame is a frame whose class with a highest degree of certainty is different in the first classification result from that of a frame regarded as a reference among the series of frames and whose class with a highest degree of certainty differs in the first classification result and the second classification result.

The identifying unit 404 identifies, as a reference among the series of frames, any frame whose class with a highest degree of certainty is identical in the first classification result and the second classification result. The identifying unit 404 identifies, for example, one or more first frames whose class with a highest degree of certainty is different in the first classification result from that of the frame identified as a reference and whose class with a highest degree of certainty differs in the first classification result and the second classification result. The identifying unit 404 may thus identify a first frame which may have been subjected to a patch attack.

The determining unit 405 identifies a first class with a highest degree of certainty in the first classification result with respect to any frame regarded as a reference. The determining unit 405 identifies a second frame that is immediately before or immediately after the identified first frame. Thus, for each of the identified first frames, the determining unit 405 enables verification of the degree of variation in the degree of certainty of the first class between each first frame and identified second frame.

The determining unit 405 determines, based on the identified first class, whether a predetermined condition is satisfied by a relationship between the first degree of certainty of the first class in the first classification result for the identified first frame and the second degree of certainty of the first class in the first classification result for the identified second frame. The predetermined condition is, for example, that the degree of variation is relatively large between the first degree of certainty and the second degree of certainty. The determining unit 405 determines the series of frames to be invalid when the relationship satisfies the predetermined condition. The determining unit 405 determines the series of frames to be not invalid when the relationship does not satisfy the predetermined condition.

For each of the identified first frames, for example, the determining unit 405 calculates an absolute difference between the first degree of certainty of the first class in the first classification result for the first frame and the second degree of certainty of the first class in the first classification result for the identified second frame. The determining unit 405 calculates, for example, a statistic related to the calculated absolute differences. The statistic is, for example, a total value. The statistic may be, for example, a mean, a maximum, a minimum, a mode, or a median. For example, the determining unit 405 calculates a total value or a mean related to the calculated absolute differences. As a result, the determining unit 405 may obtain a guide for detecting a patch attack.

For example, for a first frame whose class with a highest degree of certainty differs in the first classification result from that of a second frame that is immediately before or immediately after the first frame among the identified first frames, the determining unit 405 may correct the calculated absolute difference with a coefficient greater than 1. The determining unit 405 may calculate the statistic related to the absolute differences, for example, after correcting at least any one of the absolute differences. As a result, the determining unit 405 may give importance to an absolute difference that is based on the first frame determined to have a relatively high probability of being involved in a patch attack since the class thereof with a highest degree of certainty differs, in the first classification result, from that of the second frame. Accordingly, the determining unit 405 may facilitate detection of a patch attack.

The determining unit 405 determines, for example, whether the calculated statistic is at least equal to a threshold value. The threshold value is set, for example, in advance by the user. For example, the determining unit 405 determines the series of frames to be invalid when the statistic is at least equal to the threshold value. For example, the determining unit 405 may determine that the first frame is invalid among the series of frames when the statistic is at least equal to the threshold value. For example, the determining unit 405 determines the series of frames to be not invalid when the statistic is less than the threshold value. The determining unit 405 may therefore detect a patch attack with high accuracy.

The determining unit 405 may determine, for example, whether an absolute difference between the first degree of certainty of the first class in the first classification result for any one of the first frames and the second degree of certainty of the first class in the first classification result for the identified second frame, is at least equal to a threshold value. The threshold value is set, for example, in advance by the user. For example, the determining unit 405 determines the series of frames to be invalid when the absolute difference is at least equal to the threshold value. For example, in a case where the absolute difference is at least equal to the threshold value, the determining unit 405 may determine any one of first frames with an absolute difference at least equal to the threshold value to be invalid. For example, the determining unit 405 determines the series of frames to be not invalid when the absolute difference is less than the threshold value. The determining unit 405 may thus detect a patch attack with high accuracy.

For each frame of the identified first frames, for example, the determining unit 405 may identify, instead of the second frame, a third frame that is within a predetermined proximity range from the first frame. The proximity range is, for example, a range of five frames before or after the first frame. The third frame is, for example, a frame five frames before the first frame.

The determining unit 405 determines, based on the identified first class, whether a predetermined condition is satisfied by a relationship between the first degree of certainty of the first class in the first classification result for the identified first frame and a third degree of certainty of the first class in the first classification result for the identified third frame. The predetermined condition is, for example, that the degree of variation is relatively large between the first degree of certainty and the third degree of certainty. The determining unit 405 determines the series of frames to be invalid when the relationship satisfies the predetermined condition. The determining unit 405 determines the series of frames to be not invalid when the relationship does not satisfy the predetermined condition.

For each of the identified first frames, for example, the determining unit 405 calculates an absolute difference between the first degree of certainty of the first class in the first classification result for the first frame and the third degree of certainty of the first class in the first classification result for the identified third frame. The determining unit 405 calculates, for example, a statistic related to the calculated absolute differences. The statistic is, for example, a total value. The statistic may be, for example, a mean, a maximum, a minimum, a mode, or a median. For example, the determining unit 405 calculates a total value or a mean related to the calculated absolute differences. As a result, the determining unit 405 may obtain a guide for detecting a patch attack.

For example, for a first frame whose class with a highest degree of certainty differs in the first classification result from that of a third frame that is immediately before or immediately after the first frame among the identified first frames, the determining unit 405 may correct the calculated absolute difference with a coefficient greater than 1. The determining unit 405 may calculate the statistic related to the absolute differences, for example, after correcting at least any one of the absolute differences. As a result, the determining unit 405 may give importance to an absolute difference that is based on the first frame determined to have a relatively high probability of being involved in a patch attack since the class thereof with a highest degree of certainty differs in the first classification result from that of the third frame. Accordingly, the determining unit 405 may facilitate detection of a patch attack.

The determining unit 405 determines, for example, whether the calculated statistic is at least equal to a threshold value. The threshold value is set, for example, in advance by the user. For example, the determining unit 405 determines the series of frames to be invalid when the statistic is at least equal to the threshold value. For example, the determining unit 405 may determine that the first frame is invalid among the series of frames when the statistic is at least equal to the threshold value. For example, the determining unit 405 determines the series of frames to be not invalid when the statistic is less than the threshold value. The determining unit 405 may therefore detect a patch attack with high accuracy.

The determining unit 405 may determine, for example, whether an absolute difference between the first degree of certainty of the first class in the first classification result for any one of the first frames and the third degree of certainty of the first class in the first classification result for the identified third frame, is at least equal to a threshold value. The threshold value is set, for example, in advance by the user. For example, the determining unit 405 determines the series of frames to be invalid when the absolute difference is at least equal to the threshold value. For example, in a case where the absolute difference is at least equal to the threshold value, the determining unit 405 may determine any one of first frames with an absolute difference at least equal to the threshold value to be invalid. For example, the determining unit 405 determines the series of frames to be not invalid when the absolute difference is less than the threshold value. The determining unit 405 may thus detect a patch attack with high accuracy.

For each of the identified first frames, for example, the determining unit 405 may identify two or more fourth frames that are within a predetermined proximity range from the first frame. The proximity range is, for example, a range of five frames before or after the first frame. The fourth frames are, for example, two frames before the first frame and two frames after the first frame.

The determining unit 405 determines, based on the identified first class, whether a predetermined condition is satisfied by a relationship between the first degree of certainty of the first class in the first classification result for the identified first frame and a fourth degree of certainty of the first class in the first classification result for the identified fourth frame. The predetermined condition is, for example, that the degree of variation in the degree of certainty is relatively large. The determining unit 405 determines the series of frames to be invalid when the relationship satisfies the predetermined condition. The determining unit 405 determines the series of frames to be not invalid when the relationship does not satisfy the predetermined condition.

For each of the identified first frames, for example, the determining unit 405 calculates an amount of variation between the first degree of certainty of the first class in the first classification result for the first frame and the fourth degree of certainty of the first class in the first classification result for the identified fourth frame. The amount of variation may be, for example, a mean of a slope. The determining unit 405 determines, for example, whether the calculated amount of variation is at least equal to a threshold value. The threshold value is set, for example, in advance by the user.

For example, the determining unit 405 determines the series of frames to be invalid when the amount of variation is at least equal to the threshold value. For example, the determining unit 405 may determine that the first frame is invalid among the series of frames when the amount of variation is at least equal to the threshold value. For example, the determining unit 405 determines the series of frames to be not invalid when the amount of variation is less than the threshold value. The determining unit 405 may therefore detect a patch attack with high accuracy.

The output unit 406 outputs a processing result of at least any one of the functional units. The form of output is, for example, display onto a display device, print output to a printer, transmission to an external device via the network I/F 303, or storage into a storage region such as the memory 302 or the recording medium 305. Thus, the output unit 406 enables notifying the user of the processing result of at least any one of the functional units, to improve the convenience of the information processing device 100.

The output unit 406 outputs, for example, the result of determination by the determining unit 405, concerning whether the series of frames is invalid, the result of determination being output in such a manner as to allow reference by the user. For example, the output unit 406 may transmit, to another computer, the result of determination by the determining unit 405, concerning whether the series of frames is invalid. As a result, the output unit 406 enables the presence of a patch attack to be known externally.

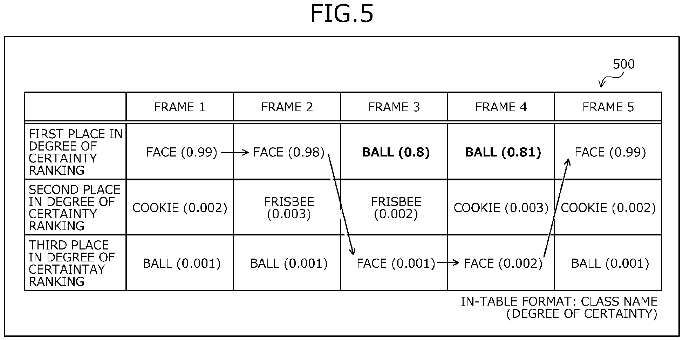

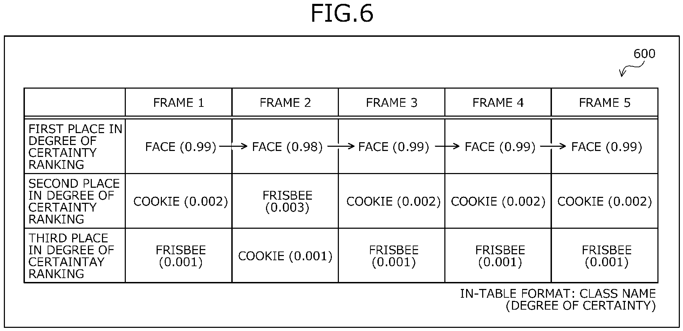

An example of operation of the information processing device 100 is described with reference to Figs. 5 and 6.

Figs. 5 and 6 are explanatory views of an example of operation of the information processing device 100. In Figs. 5 and 6, the information processing device 100 obtains moving image data reflecting an object. The moving image data contains, for example, a series of frames. In the example depicted in Figs. 5 and 6, the moving image data contains, for example, frames 1 to 5 reflecting an identical object.

Here, the identity of objects is determined using a technique such as, for example, IoU. A frame 1 is, for example, a frame in which an object is first recognized. A frame 5 is, for example, a frame in which the object is most recently recognized. The object is assumed to appear in moving image data with an adversarial patch attached thereto. The object is a face. The adversarial patch works, for example, so that the object is erroneously classified into a class other than "face".

The information processing device 100 stores an object detection model A. The object detection model A has, for example, a function of recognizing a region where an object is appearing in a frame, identifying a type of the object, and calculating, for each of the classes, a degree of certainty that the object is classified into the class. The degree of certainty is a value not less than 0 but not more than 1.

The information processing device 100 stores an object detection model B. The object detection model B has, for example, a function of recognizing a region where an object is appearing in a frame, identifying a type of the object, and calculating, for each of the classes, a degree of certainty that the object is classified into the class. The degree of certainty is a value not less than 0 and not more than 1. The object detection model B has, for example, an algorithm different from that of the object detection model A. For example, preferably, an adversarial patch that is effective against the object detection model A is ineffective against the object detection model B. Description of Fig. 5 follows.

In Fig. 5, for each of a series of frames, the information processing device 100 uses the object detection model A to obtain, in descending order from one with a highest degree of certainty with which the object is classified, three classes among multiple classes into which an object appearing in the frame is classified, the information processing device 100 further obtains the respective degrees of certainty of the three classes. As shown in Table 500, for example, the information processing device 100 obtains three classes into which an object appearing in each of the frames 1 to 5 is classified, and the respective degrees of certainty of the three classes.

As shown in Table 500, in the frames 1 and 2, "face" is the class with a highest degree of certainty. On the other hand, as shown in Table 500, in the frames 3 and 4, "ball" is the class with a highest degree of certainty, with "face" with a reduced degree of certainty. In the frame 5, "face" is the class with a highest degree of certainty. Description of Fig. 6 follows.

In Fig. 6, for each of a series of frames, the information processing device 100 uses the object detection model B to obtain, in descending order from one with a highest degree of certainty with which the object is classified, three classes among multiple classes into which the object appearing in the frame is classified and the respective degrees of certainty of the three classes. As shown in Table 600, for example, the information processing device 100 obtains three classes into which an object appearing in each of the frames 1 to 5 is classified, and the respective degrees of certainty of the three classes.

It is conceivable that change over time of the degree of certainty tends to become smaller than a certain level when the number of frames per second of moving image data exceeds a certain value. For example, it is conceivable that, when changes over time in the position of an object, shooting direction, etc. are less than certain levels, the change over time of the degree of certainty is also less than a certain level. In contrast, it is conceivable that, among a series of frames, the degree of certainty tends to vary to a relatively large extent in a frame where an object is shot from a shooting direction allowing an adversarial patch to work particularly effectively. For example, it is conceivable that, in a frame where an object is shot from a shooting direction allowing an adversarial patch to work particularly effectively, the degree of certainty for a class into which classification of an object is correct is reduced a relatively large extent. With consideration of these properties, the information processing device 100 employs the degree of variation in the degree of certainty as an index value for the presence/absence of a patch attack. For example, the information processing device 100 determines the presence/absence of a patch attack as follows.

The information processing device 100 identifies, in a frame set as a reference, a reference class with a highest degree of certainty in the object detection model A. In the example depicted in Figs. 5 and 6, the information processing device 100 sets, as the frame to be a reference, the frame 1 whose class with a highest degree of certainty is the same in the object detection models A and B. In the frame 1 assumed as a reference, the information processing device 100 sets, as the reference class, the class "face," which has a highest degree of certainty in the object detection model A.

The information processing device 100 identifies one or more frames i whose class with a highest degree of certainty is not the same in the object detection models A and B. Tₛ<i≤Tₑ is established. Tₛ is the number of a frame in which an object was first recognized. Tₑ is the number of a frame in which the object was most recently recognized. For each of the identified frames i, the information processing device 100 calculates an absolute difference between the degrees of certainty for the reference class "face" of the frames i and i-1. The information processing device 100 calculates a sum of the calculated absolute differences as an index value for presence/absence of a patch attack.

In the example depicted in Figs. 5 and 6, for example, the information processing device 100 identifies the frames 3 and 4. For example, the information processing device 100 calculates an absolute difference 10.98-0.001| =0.979 between the degrees of certainty for the class "face" of the frames 3 and 2. For example, the information processing device 100 calculates an absolute difference 10.001 -0.0021 =0.001 between the degrees of certainty for the class "face" of the frames 4 and 3. For example, the information processing device 100 calculates a sum 0.98 of the absolute differences as the index value for presence/absence of a patch attack.

In this manner, the information processing device 100 may calculate an index value for presence/absence of a patch attack whose value becomes larger as the degree of variation in the degree of certainty increases. As a result, the information processing device 100 enables accurate detection of a patch attack, with consideration of the likelihood of a patch attack.

Although here, a case is described where the absolute differences are added together as they are, this is not limitative. For example, the information processing device 100 may calculate a weighted sum of the absolute differences. For example, the information processing device 100 calculates a value obtained by multiplying the absolute differences between degrees of certainty for the reference class "face" of the frames i and i-1 by a coefficient. The coefficient is a value greater than 1 when the class with a highest degree of certainty is different between the frames i and i-1. The coefficient is 1 when the class with a highest degree of certainty is the same in the frames i and i-1. For example, the information processing device 100 calculates, as an index value for the presence/absence of a patch attack, a sum of values obtained by multiplying the absolute differences by a coefficient.

The information processing device 100 determines a patch attack to be present when the calculated index value for the presence/absence of a patch attack is at least equal to a threshold value. The threshold value is set, for example, in advance by the user. On the other hand, the information processing device 100 determines a patch attack to be absent when the calculated index value for presence/absence of a patch attack is less than the threshold value. The information processing device 100 outputs the presence/absence of a patch attack in such a manner as to allow reference by the user. The information processing device 100 may thus detect a patch attack with high accuracy by using the index value that properly represents a likelihood of a patch attack. The information processing device 100 enables the user to ascertain the presence/absence of a patch attack, thereby achieving improved security.

Although here, a case is described where the information processing device 100 calculates a sum of the absolute differences between the degrees of certainty for the class "face" of the frames i and i-1, this is not limitative. For example, the information processing device 100 may calculate a sum of the absolute differences between the degrees of certainty for the class "face" of the frames i and i+1. For example, the information processing device 100 may calculate a sum of the absolute differences between the degrees of certainty for the class "face" of the frames i and i-1 and the absolute differences between the degrees of certainty for the class "face" of the frames i and i+1.

Another example of operation of the information processing device 100 is described. In the example depicted in Figs. 5 and 6, for each of the series of frames, the information processing device 100 obtains in advance respective degrees of certainty of three classes into which an object is classified, by using the object detection models A and B. On the other hand, for each of the series of frames, the information processing device 100 may calculate an index value while obtaining, sequentially, respective degrees of certainty of three classes into which an object is classified, by using the object detection models A and B.

The information processing device 100 prepares a variable S=0. By using the object detection models A and B, the information processing device 100 obtains, for the frame 1, three classes in descending order from one with a highest degree of certainty with which the object is classified, and the respective degrees of certainty of the three classes. The information processing device 100 sets, as a reference class in the frame 1, the class "face" with a highest degree of certainty in the object detection model A. The information processing device 100 stores the degree of certainty for the class "face" by the object detection model A in the frame 1.

By using the object detection models A and B, the information processing device 100 obtains, for the frame 2, three classes in descending order from one with a highest degree of certainty with which the object is classified, and the respective degrees of certainty of the three classes. The information processing device 100 determines whether, in the frame 2, the class with a highest degree of certainty is the same in the object detection models A and B. Upon determining the class to be "the same", the information processing device 100 deletes the degree of certainty for the class "face" by the object detection model A with respect to the frame 1, and stores the degree of certainty for the class "face" by the object detection model A with respect to the frame 2.

By using the object detection models A and B, the information processing device 100 obtains, for the frame 3, three classes in descending order from one with a highest degree of certainty with which the object is classified, and the respective degrees of certainty of the three classes. The information processing device 100 determines whether, in the frame 3, the class with a highest degree of certainty is the same in the object detection models A and B. Upon determining the class to be "not the same", the information processing device 100 calculates an absolute difference between the degree of certainty for the class "face" by the object detection model A with respect to the frame 2 and the degree of certainty for the class "face" by the object detection model A with respect to the frame 3. The information processing device 100 adds the calculated absolute difference to the variable S. The information processing device 100 deletes the degree of certainty for the class "face" by the object detection model A with respect to the frame 2, and stores the degree of certainty for the class "face" by the object detection model A with respect to the frame 3.

By using the object detection models A and B, the information processing device 100 obtains, for the frame 4, three classes in descending order from one with a highest degree of certainty with which the object is classified, and the respective degrees of certainty of the three classes. The information processing device 100 determines whether, in the frame 4, the class with a highest degree of certainty is the same in the object detection models A and B. Upon determining the class to be "not the same", the information processing device 100 calculates an absolute difference between the degree of certainty for the class "face" by the object detection model A with respect to the frame 3 and the degree of certainty for the class "face" by the object detection model A with respect to the frame 4. The information processing device 100 adds the calculated absolute difference to the variable S. The information processing device 100 deletes the degree of certainty for the class "face" by the object detection model A with respect to the frame 3, and stores the degree of certainty for the class "face" by the object detection model A with respect to the frame 4.

By using the object detection models A and B, the information processing device 100 obtains, for the frame 5, three classes in descending order from one with a highest degree of certainty with which the object is classified, and the respective degrees of certainty of the three classes. The information processing device 100 determines whether, in the frame 5, the class with a highest degree of certainty is the same in the object detection models A and B. The information processing device 100 determines it as being the same and, since the frame 5 is the last frame, transitions to the next processing without calculating the absolute difference. The information processing device 100 calculates a sum of the calculated absolute differences as the index value for the presence/absence of a patch attack.

The information processing device 100 determines a patch attack to be present when the calculated index value for the presence/absence of a patch attack is at least equal to a threshold value. The threshold value is set, for example, in advance by the user. On the other hand, the information processing device 100 determines a patch attack to be absent when the calculated index value for presence/absence of a patch attack is less than the threshold value. The information processing device 100 outputs the presence/absence of a patch attack in such a manner as to allow reference by the user. The information processing device 100 may thus detect a patch attack with high accuracy by using the index value that properly represents a likelihood of a patch attack. The information processing device 100 enables the user to ascertain the presence/absence of a patch attack, thereby achieving improved security.

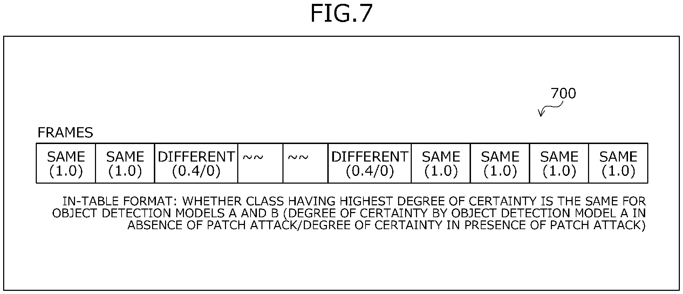

An example of an effect of the information processing device 100 is described with reference to Fig. 7.

Fig. 7 is an explanatory view of an example of an effect. In Fig. 7, Table 700 shows whether in each of a series of frames, the class with a highest degree of certainty is the same between the object detection models A and B. Table 700 indicates, for each of the series of frames, the degree of certainty in a case where a patch attack is absent and the degree of certainty in a case where a patch attack is present, which are both obtained by the object detection model A. When the respective degrees of certainty by the object detection model A in both cases of absence and presence of a patch attack are an identical value, Table 700 shows only the identical value.

First, as for a case where a patch attack is actually absent, comparison is made between the information processing device 100 and a conventional technique of attempting to detect a patch attack from comparison of a threshold value 0.4 and the rate of non-coincidence of the classes with a highest degree of certainty in the object detection models A and B. In the example depicted in Fig. 7, it is assumed that, in the absence of a patch attack, the class with a highest degree of certainty differs between the object detection models A and B in four frames among 10 frames. In the frame whose class with a highest degree of certainty differs between the object detection models A and B, the degree of certainty by the object detection model A is assumed to be 0.4.

Under these conditions, the conventional technique erroneously determines a patch attack as being present since the non-coincidence rate 4/10 is at least equal to the threshold value 0.4. On the other hand, the information processing device 100 may correctly determine a patch attack as being not present since the index value 1.2=(|0.4-1.0| + |0.4-0.4|+ |0.4-0.4|+ |1.0-0.4| ) is less than a threshold value 2.

Next, as for a case where a patch attack is actually present, comparison is made between the information processing device 100 and a conventional technique that attempts to detect a patch attack from comparison of a threshold value 0.4 and the rate of non-coincidence of the classes with a highest degree of certainty in the object detection models A and B. In the example depicted in Fig. 7, it is assumed that, in the presence of a patch attack, the class with a highest degree of certainty differs between the object detection models A and B in three frames among 10 frames. In the frame whose class with a highest degree of certainty differs between the object detection models A and B, the degree of certainty by the object detection model A is assumed to be 0.

Under these conditions, the conventional technique erroneously determines a patch attack as being absent since the non-coincidence rate 3/10 is less than the threshold value 0.4. On the other hand, the information processing device 100 may correctly determine a patch attack as being present since the index value 2.0=(|0-1.0| + |0-0| + | 1.0-0|) is at least equal to the threshold value 2. In this manner, the information processing device 100 may detect a patch attack with high accuracy, as compared to the conventional technique.

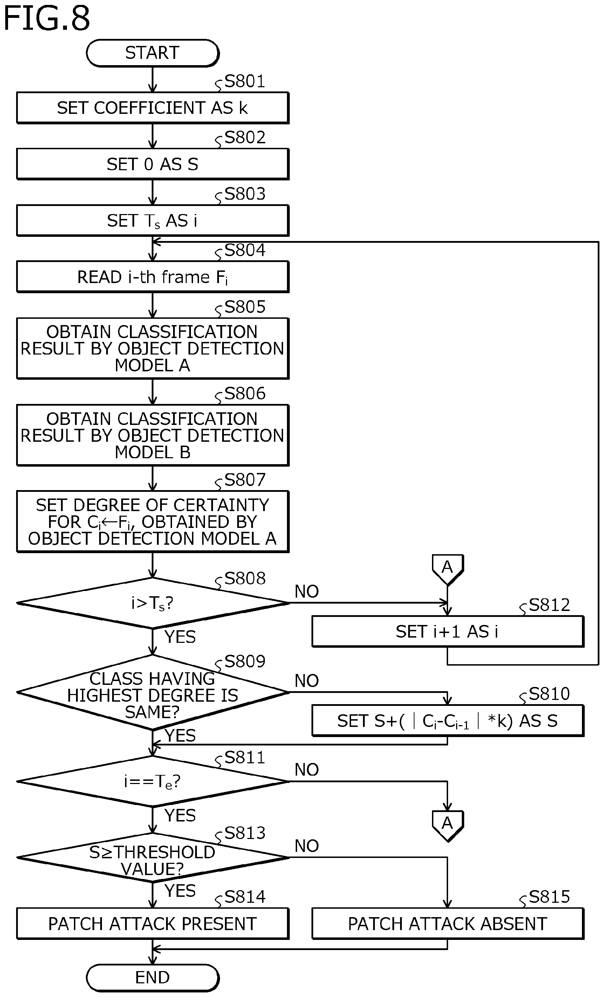

An example of an overall processing procedure of the information processing device 100 is described with reference to Fig. 8. Overall processing is implemented, for example, by the CPU 301, a storage region such as the memory 302 or the recording medium 305, and the network I/F 303, depicted in Fig. 3.

Fig. 8 is a flowchart of an example of an overall processing procedure. In Fig. 8, the information processing device 100 sets coefficient as k (step S801). The information processing device 100 sets 0 as S (step S802). The information processing device 100 sets Tₛ as i (step S803).

The information processing device 100 reads an i-th frame Fᵢ of moving image data (step S804). The information processing device 100 obtains a classification result obtained for Fᵢ by the object detection model A (step S805). The information processing device 100 obtains a classification result obtained for Fᵢ by the object detection model B (step S806). Based on the obtained classification result of the object detection model A, the information processing device 100 sets a degree of certainty of a specific class obtained with respect to Fᵢ by the object detection model A as Cᵢ (step S807).

The information processing device 100 determines whether i>Tₛ is established (step S808). Here, when i≤Tₛ (step S808: NO), the information processing device 100 transitions to the processing at step S812. On the other hand, when i>Tₛ (step S808: YES), the information processing device 100 transitions to the processing at step S809.

At step S809, the information processing device 100 determines whether the class with a highest degree of certainty for a frame Fᵢ is the same in the classification result obtained by the object detection model A and the classification result obtained by the object detection model B (step S809). When the class is not the same (step S809: NO), the information processing device 100 sets S+(|Cᵢ-Cᵢ₋₁| *k) as S (step S810) and transitions to the processing at step S811. On the other hand, when the class is the same (step S809: YES), the information processing device 100 transitions to the processing at step S811.

At step S811, the information processing device 100 determines whether i==Tₑ is established (step S811). When i==Tₑ is not true (step S811: NO), the procedure transitions to the processing at step S812. On the other hand, when i==Tₑ is true (step S811: YES), the procedure transitions to the processing at step S813.

At step S812, the information processing device 100 sets i+1 as i (step S812). Here, the information processing device 100 may delete Cᵢ₋₂. Then, the information processing device 100 returns to the processing at step S804.

At step S813, the information processing device 100 determines whether S≥threshold value is true (step S813). When S≥threshold value is true (step S813: YES), the information processing device 100 determines that a patch attack is present (step S814) and terminates the overall processing procedure. On the other hand, when S≥threshold value is false (step S813: NO), the information processing device 100 determines that a patch attack is absent (step S815) and terminates the overall processing procedure.

As set forth hereinabove, according to the information processing device 100, the first classification result may be obtained by using the first machine learning model. The first classification result indicates, in a correlated manner and for each frame of a series of frames, two or more classes into which an object in the frame is classified and respective degrees of certainty of the two or more classes. According to the information processing device 100, the second classification result may be obtained by using the second machine learning model different from the first machine learning model. The second classification result indicates, in a correlated manner and for each frame of the series of frames, two or more classes into which an object in the frame is classified and respective degrees of certainty of the two or more classes. According to the information processing device 100, among the series of frames, any frame may be identified whose class with a highest degree of certainty is the same between the first classification result and the second classification result. According to the information processing device 100, a first frame may be identified whose class with a highest degree of certainty is different in the first classification result from that of any other frame, and whose class with a highest degree of certainty differs in the first classification result and the second classification result. According to the information processing device 100, a first class may be identified that has a highest degree of certainty in the first classification result among the frames. According to the information processing device 100, a second frame may be identified that is immediately before or immediately after the first frame. According to the information processing device 100, it is possible to determine whether a predetermined condition is satisfied by a relationship between the first degree of certainty of the first class in the first classification result for the first frame and the second degree of certainty of the first class in the first classification result for the second frame. According to the information processing device 100, it is possible to determine the series of frames to be invalid if the relationship satisfies the predetermined condition and to determine the series of frames to be not invalid when the relationship does not satisfy the predetermined condition. As a result, the information processing device 100 may detect a patch attack with high accuracy.

The information processing device 100 may identify multiple first frames. The information processing device 100 may calculate, for each of the identified first frames, an absolute difference between the first degree of certainty of the first class in the first classification result and the second degree of certainty of the first class in the first classification result for the second frame. The information processing device 100 may determine whether a statistic related to the calculated absolute differences is at least equal to a threshold value. The information processing device 100 may determine the series of frames to be invalid when the statistic is at least equal to the threshold value, and determine the series of frames as not invalid when the statistic is less than the threshold value. As a result, the information processing device 100 may detect a patch attack with higher accuracy, with consideration of the series of frames as a whole.

According to the information processing device 100, the calculated absolute difference may be corrected with a coefficient greater than 1 for a first frame whose class with a highest degree of certainty differs in the first classification result from that of a second frame immediately before or immediately after the first frame among the identified first frames. According to the information processing device 100, it is possible after correction to determine the series of frames to be invalid when the statistic related to the absolute difference is at least equal to a threshold value and to determine the series of frames as not invalid when the statistic is less than the threshold value. As a result, the information processing device 100 may correct the absolute difference to detect a patch attack with higher accuracy.

According to the information processing device 100, the statistic may be a total value or a mean related to the absolute difference. As a result, the information processing device 100 may calculate a statistic that represents a likelihood of a patch attack.

According to the information processing device 100, it may be determined whether the absolute difference between the first degree of certainty of the first class in the first classification result for the first frame and the second degree of certainty of the first class in the first classification result for the second frame is at least equal to a threshold value. According to the information processing device 100, the series of frames may be determined as invalid when the absolute difference is at least equal to the threshold value and as not invalid when the absolute difference is less than the threshold value. As a result, the information processing device 100 may detect a patch attack with high accuracy.

According to the information processing device 100, a third frame may be identified that is within a predetermined proximity range from the identified first frame. According to the information processing device 100, it may be determined whether a predetermined condition is satisfied by the relationship between the first degree of certainty of the first class in the first classification result for the first frame and the third degree of certainty of the first class in the first classification result for the third frame. According to the information processing device 100, the series of frames may be determined as invalid when the relationship satisfies the predetermined condition and as not invalid when the relationship does not satisfy the predetermined condition. As a result, the information processing device 100 may detect a patch attack with high accuracy.

The information processing method described in the present embodiment may be implemented by executing a prepared program on a computer such as a personal computer or a workstation. The information processing program described is stored on a non-transitory, computer-readable recording medium, and is read out from the computer-readable medium and executed by the computer. The recording medium is a hard disk, a flexible disk, a compact (CD)-ROM, a magneto-optical (MO) disk, a digital versatile disk (DVD), etc. The program may be distributed through a network such as the Internet.

According to one aspect, highly accurate detection of a patch attack is facilitated.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A computer-readable recording medium having stored therein a program for causing a computer (100) to execute a process, the process comprising:
using a first machine learning model (110) and thereby obtaining, for each frame of a series of frames, a first classification result (111) in which a first set of two or more classes into which an object in the each frame is classified is correlated with respective degrees of certainty of the two or more classes of the first set, the first set of the two or more classes being among a plurality of classes, and the first machine learning model calculating, for each class of the plurality of classes, a degree of certainty that the object in the each frame is classified into the each class of the plurality of classes (S804 and S805);
using a second machine learning model (120) and thereby obtaining, for the each frame of the series of frames, a second classification result (121) in which a second set of two or more classes into which the object in the each frame is classified is correlated with respective degrees of certainty of the two or more classes of the second set, the second set of two or more classes being of the plurality of classes, and the second machine learning model being different from the first machine learning model and calculating, for the each class of the plurality of classes, a degree of certainty that the object in the each frame is classified into the each class (S804 and S806);
based on the obtained first classification result and the obtained second classification result, identifying, among the series of frames, a first frame whose class with a highest degree of certainty is different in the first classification result and the second classification result and differs in the first classification result from that of a second frame whose class with the highest degree of certainty is identical in the first classification result and in the second classification result (S809); and
determining the series of frames to be invalid when a condition is satisfied by a relationship between a first degree of certainty of a first class in the first classification result for the identified first frame and a second degree of certainty of the first class in the first classification result for a third frame that is immediately before or immediately after the identified first frame, and determining the series of frames to be not invalid when the condition is not satisfied by the relationship, the first class being the class, of the second frame, with the highest degree of certainty in the first classification result (S810 and S813 to S815).

2. The recording medium according to claim 1, wherein
the identifying includes identifying a plurality of the first frames, and
the determining includes calculating, for each first frame of the identified plurality of the first frames, an absolute difference between the first degree of certainty of the first class in the first classification result for the first frame and the second degree of certainty of the first class in the first classification result for the third frame that is immediately before or immediately after the first frame, and determining the series of frames to be invalid when a statistic related to the calculated absolute difference is at least equal to a threshold value and determining the series of frames to be not invalid when the statistic is less than the threshold value.

3. The recording medium according to claim 2, wherein
for the first frame whose class with the highest degree of certainty is different in the first classification result from that of the third frame that is among the identified first frames and immediately before or immediately after the first frame, the determining includes correcting the calculated absolute difference with a coefficient greater than 1 and thereafter, determining the series of frames to be invalid when the statistic related to the absolute difference is at least equal to the threshold value and determining the series of frames to be not invalid when the statistic is less than the threshold value.

4. The recording medium according to claim 2 or 3, wherein
the statistic is a total value or a mean related to the absolute difference.

5. The recording medium according to claim 1, wherein
the determining includes determining the series of frames to be invalid when an absolute difference between the first degree of certainty of the first class in the first classification result for the identified first frame and the second degree of certainty of the first class in the first classification result for the third frame that is immediately before or immediately after the identified first frame is at least equal to a threshold value, and determining the series of frames to be not invalid when the absolute difference is less than the threshold value.

6. The recording medium according to claim 1, wherein
the determining includes determining the series of frames to be invalid when a condition is satisfied by a relationship between the first degree of certainty of the first class in the first classification result for the identified first frame and a third degree of certainty of the first class in the first classification result for a fourth frame within a predetermined proximity range from the identified first frame, and determining the series of frames to be not invalid when the condition is not satisfied by the relationship.

7. An information processing method executed by a computer, the information processing method comprising:
using a first machine learning model (110) and thereby obtaining, for each frame of a series of frames, a first classification result (111) in which a first set of two or more classes into which an object in the each frame is classified is correlated with respective degrees of certainty of the two or more classes of the first set, the first set of the two or more classes being among a plurality of classes, and the first machine learning model calculating, for each class of the plurality of classes, a degree of certainty that the object in the each frame is classified into the each class of the plurality of classes (S804 and S805);
using a second machine learning model (120) and thereby obtaining, for the each frame of the series of frames, a second classification result (121) in which a second set of two or more classes into which the object in the each frame is classified is correlated with respective degrees of certainty of the two or more classes of the second set, the second set of two or more classes being of the plurality of classes, and the second machine learning model being different from the first machine learning model and calculating, for the each class of the plurality of classes, a degree of certainty that the object in the each frame is classified into the each class (S804 and S806);
based on the obtained first classification result and the obtained second classification result, identifying, among the series of frames, a first frame whose class with a highest degree of certainty is different in the first classification result and the second classification result and differs in the first classification result from that of a second frame whose class with the highest degree of certainty is identical in the first classification result and in the second classification result (S809); and
determining the series of frames to be invalid when a condition is satisfied by a relationship between a first degree of certainty of a first class in the first classification result for the identified first frame and a second degree of certainty of the first class in the first classification result for a third frame that is immediately before or immediately after the identified first frame, and determining the series of frames to be not invalid when the condition is not satisfied by the relationship, the first class being the class, of the second frame, with the highest degree of certainty in the first classification result (S810 and S813 to S815).

8. An information processing device, comprising:
a memory (302); and
a processor (301) coupled to the memory, the processor configured to:
use a first machine learning model (110) and thereby obtain, for each frame of a series of frames, a first classification result (111) in which a first set of two or more classes into which an object in the each frame is classified is correlated with respective degrees of certainty of the two or more classes of the first set, the first set of the two or more classes being among a plurality of classes, and the first machine learning model calculating, for each class of the plurality of classes, a degree of certainty that the object in the each frame is classified into the each class of the plurality of classes (S804 and S805);
use a second machine learning model (120) and thereby obtain, for the each frame of the series of frames, a second classification result (121) in which a second set of two or more classes into which the object in the each frame is classified is correlated with respective degrees of certainty of the two or more classes of the second set, the second set of two or more classes being of the plurality of classes, and the second machine learning model being different from the first machine learning model and calculating, for the each class of the plurality of classes, a degree of certainty that the object in the each frame is classified into the each class (S804 and S806);
based on the obtained first classification result and the obtained second classification result, identify, among the series of frames, a first frame whose class with a highest degree of certainty is different in the first classification result and the second classification result and differs in the first classification result from that of a second frame whose class with the highest degree of certainty is identical in the first classification result and in the second classification result (S809); and
determine the series of frames to be invalid when a condition is satisfied by a relationship between a first degree of certainty of a first class in the first classification result for the identified first frame and a second degree of certainty of the first class in the first classification result for a third frame that is immediately before or immediately after the identified first frame, and determine the series of frames to be not invalid when the condition is not satisfied by the relationship, the first class being the class, of the second frame, with the highest degree of certainty in the first classification result (S810 and S813 to S815).
